# EUROPÄISCHE PATENTSCHRIFT

(11) **EP 3 966 061 B1**
(45) Veröffentlichungstag und Bekanntmachung des Hinweises auf die Patenterteilung: **07.06.2023**
(21) Anmeldenummer: 20723052.5
(22) Anmeldetag: 24.04.2020
(51) Int. Cl.: B60K 35/00, G02B 27/01, G06F 3/0482, G06F 3/0484, G06F 3/0485

(54) **MENSCH-MASCHINE-INTERAKTION IN EINEM KRAFTFAHRZEUG**
HUMAN-MACHINE INTERACTION IN A MOTOR VEHICLE
INTERACTION HOMME-MACHINE DANS UN VÉHICULE À MOTEUR

(30) Priorität: 09.05.2019 DE 102019206749
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: WYSZKA, Robert Jan, 30165 Hannover (DE); MORALES FERNÁNDEZ, Daniel, 38114 Braunschweig (DE); HAAR, Adrian, 30173 Hannover (DE)
(86) Internationale Anmeldenummer: PCT/EP2020/061552
(87) Internationale Veröffentlichungsnummer: WO 2020/224997

(56) Entgegenhaltungen:
- EP-A2- 2 783 892
- DE-A1-102010 041 584
- US-A1- 2016 207 399
- US-A1- 2018 370 567
- US-B2- 9 317 759

## Beschreibung

Die vorliegende Erfindung betrifft ein Verfahren zur Mensch-Maschine-Interaktion in einem Kraftfahrzeug, wobei ein erstes grafisches Element mittels eines Erweiterte-Realität-Systems des Kraftfahrzeugs in einem Blickfeld eines Benutzers des Kraftfahrzeugs eingeblendet wird, derart, dass das erste grafische Element innerhalb eines Anzeigebereichs angeordnet ist. Ein Bildlaufeingabesignal wird mittels einer Eingabeschnittstelle des Kraftfahrzeugs erfasst. Ferner betrifft die Erfindung eine Mensch-Maschine-Schnittstellenvorrichtung für ein Kraftfahrzeug sowie ein Computerprogramm.

Bei bestehenden Ansätzen zur Mensch-Maschine-Interaktion muss der Fahrer eines Kraftfahrzeugs seine Aufmerksamkeit und seinen Blick, um während des Fahrens durch eine Liste von Objekten zu scrollen, beispielsweise eine Liste von Multimediaobjekten, wie Lieder oder Musikalben, oder eine Kontaktliste, für eine gewissen Zeit auf die grafische Darstellung der Liste richten. Diese Art der Interaktion kann zum einen langsam sein zum anderen auch gefährlich, weil sie den Fahrer von der Steuerung des Kraftfahrzeug ablenkt.

Im Dokument US 2018/0067307 A1 wird ein Head-up-Display für ein Kraftfahrzeug beschrieben, das einen Bildschirm aufweist, welches mit einer Windschutzscheibe des Kraftfahrzeugs verbunden ist. Der Bildschirm kann beispielsweise dazu verwendet werden, erweiterte Realitätsdaten anzuzeigen.

Dokument DE 10 2016 225 639 A1 betrifft eine Head-up-Display-Vorrichtung für ein Kraftfahrzeug. Dabei erfolgt eine horizontale oder vertikale Verschiebung des angezeigten Bildes entsprechend dem vor dem Kraftfahrzeug liegenden Straßenverlauf. Bei Kurvenfahrten wird das Bild dynamisch verlagert, um die Informationen im Blickfeld des Fahrers zu halten. Die Inhalte können derart verschoben werden, dass sie für den Fahrer zentriert zu seiner Fahrspur erscheinen.

Im Dokument DE 10 2010 041 584 A1 wird ein Verfahren zur Auswahl eines Listenelements durch scrollen aus einer eine Vielzahl von Listenelementen umfassenden und zumindest auszugsweise auf einer Anzeigeeinheit in einem Kraftfahrzeug darstellbaren Liste.

Vor diesem Hintergrund ist es eine Aufgabe der vorliegenden Erfindung, ein verbessertes Konzept zur Mensch-Maschine-Interaktion in einem Kraftfahrzeug anzugeben, welches zu einer erhöhten Sicherheit führt.

Erfindungsgemäß wird diese Aufgabe durch ein Verfahren zur Mensch-Maschine-Interaktion, eine Mensch-Maschine-Schnittstellenvorrichtung und ein Computerprogramm nach den unabhängigen Ansprüchen gelöst. Vorteilhafte Weiterbildungen und weitere Ausgestaltungen sind Gegenstand der abhängigen Ansprüche.

Das verbesserte Konzept beruht auf der Idee, ein grafisches Element mittels eines Erweiterte-Realität-Systems in ein Blickfeld des Benutzers einzublenden und entlang eines Bildlaufpfads zu bewegen, der von einer, mittels eines Sensorsystems des Kraftfahrzeugs bestimmten, ausgezeichneten Richtung abhängt.

Erfindungsgemäß wird ein Verfahren zur Mensch-Maschine-Interaktion in einem Kraftfahrzeug angegeben, wobei ein erstes grafisches Element mittels eines Erweiterte-Realität-Systems (englisch "augmented-reality system", AR-System) des Kraftfahrzeugs in ein Blickfeld des Benutzers des Kraftfahrzeugs eingeblendet wird, derart, dass das erste grafische Element innerhalb eines Anzeigebereichs, insbesondere eines Anzeigebereichs einer Anzeigefläche des AR-Systems, angeordnet ist. Ein Bildlaufeingabesignal wird mittels einer Eingabeschnittstelle des Kraftfahrzeugs erfasst. Mittels eines Sensorsystems des Kraftfahrzeugs wird eine ausgezeichnete Richtung, insbesondere einer Umgebung des Kraftfahrzeugs oder einer Umgebung des Benutzers, bestimmt. Mittels einer Recheneinheit des Kraftfahrzeugs wird ein Bildlaufpfad in Abhängigkeit von der ausgezeichneten Richtung bestimmt, wobei der Bildlaufpfad einer Linie entspricht, die mit der ausgezeichneten Richtung einen gemeinsamen Fluchtpunkt aufweist. Abhängig von dem Bildlaufeingabesignal wird das erste grafische Element entlang des Bildlaufpfads mittels des AR-Systems aus dem Anzeigebereich herausbewegt.

Es wird außerdem ein zweites grafisches Element wird abhängig von dem Bildlaufeingabesignal mittels des AR-Systems entlang des Bildlaufpfads in den Anzeigebereich hineinbewegt und insbesondere in das Blickfeld eingeblendet.

Das Einblenden der grafischen Elemente in das Blickfeld des Benutzers beinhaltet insbesondere ein Anzeigen der grafischen Elemente auf der Anzeigefläche des AR-Systems oder das Projizieren der grafischen Elemente auf die Anzeigefläche des AR-Systems.

Bei dem Anzeigebereich handelt es sich insbesondere um einen Teilbereich der Anzeigefläche, in welchem sich ein Objekt, beispielsweise eines der grafischen Elemente, befindet, wenn es durch den Benutzer oder durch ein Infotainmentsystem des Kraftfahrzeugs aktuell ausgewählt ist.

Bei dem Bildlaufeingabesignal handelt es sich um einen Befehl, der durch eine Nutzereingabe erzeugt wird, um auf der Anzeigefläche durch eine Liste von Objekten zu scrollen oder zu blättern, zu welcher insbesondere das erste und das zweite grafische Element gehören, beispielsweise um bei ausgewähltem ersten grafischen Element das zweite grafische Element oder ein weiteres grafisches Element auszuwählen.

Bei dem Bildlaufpfad handelt es sich insbesondere um eine perspektivische oder scheinbare Richtung oder einen perspektivischen oder scheinbaren Pfad, entlang der oder entlang dem das erste und zweite grafische Element im Blickfeld des Benutzers beziehungsweise auf der Anzeigefläche für den Benutzer scheinbar bewegt werden. Aufgrund der zweidimensionalen Ausgestaltung der Anzeigefläche können entlang des Bildlaufpfads perspektivische Anpassungen, beispielsweise eine Anpassung der Größe der grafischen Objekte, vorgenommen werden, um einen realistischen visuellen Eindruck für den Benutzer zu erzeugen, so dass sich beispielsweise die grafischen Objekte entlang des Bildpfads von dem Benutzer zu entfernen oder auf den Benutzer zuzubewegen scheinen.

Bei der ausgezeichneten Richtung handelt es sich insbesondere um eine Richtung oder einen Richtungsverlauf der Umgebung des Kraftfahrzeugs, beispielsweise um eine Richtung oder einen Richtungsverlauf einer oder mehrerer Fahrbahnmarkierungslinien oder Fahrbahnkanten. Bei der ausgezeichneten Richtung kann es sich auch um eine Blickrichtung des Benutzers handeln.

Durch das Einblenden der grafischen Elemente in das Blickfeld des Benutzers muss der Benutzer seinen Bild nicht von der Straße abwenden, um die grafischen Elemente anzusehen. Dadurch wird die Mensch-Maschine-Interaktion nach dem verbesserten Konzept sicherer. Außerdem kann durch die Verknüpfung des Bildlaufpfads mit der ausgezeichneten Richtung eine Bewegungsrichtung der grafischen Elemente an eine aktuelle Situation des Benutzers oder der Umgebung des Kraftfahrzeugs angepasst werden, so dass eine Ablenkung durch die Anzeige beziehungsweise die Bewegung der grafischen Objekte minimiert und die Sicherheit für den Fahrer weiter erhöht werden kann.

Insbesondere kann eine Fluchtrichtung der grafischen Elemente oder der grafischen Elemente zusammen mit weiteren grafischen Elementen der Liste, zu denen das erste und das zweite grafische Element gehört, mit einer Fluchtrichtung der ausgezeichneten Richtung übereinstimmen oder näherungsweise übereinstimmen. Die ausgezeichnete Richtung und die grafischen Elemente der Liste werden also beispielsweise aufeinander angepasst, so dass eine Ablenkung des Fahrers minimiert werden kann.

Gemäß zumindest einer Ausführungsform des Verfahrens wird abhängig von dem Bildlaufeingabesignal eine Vielzahl, also drei oder mehr, von grafischen Elementen entlang des Bildlaufpfads bewegt, wobei die Vielzahl von grafischen Elementen das erste und das zweite grafische Element beinhaltet.

Abhängig von dem Bildlaufeingabesignal wird also durch die Vielzahl von grafischen Elementen, welche der Liste der grafischen Elemente oder Objekte entspricht, gescrollt oder geblättert.

Gemäß zumindest einer Ausführungsform ist der Bildlaufpfad zumindest teilweise parallel, antiparallel oder tangential zu der ausgezeichneten Richtung.

Gemäß zumindest einer Ausführungsform wird eine Bewegungsgeschwindigkeit, mit der das erste grafische Element aus dem Anzeigebereich herausbewegt wird und/oder mit der das zweite grafische Element entlang des Bildlaufpfads in den Anzeigebereich hineinbewegt wird, mittels des Erweiterte-Realität-Systems abhängig von einer Fahrtgeschwindigkeit des Kraftfahrzeugs angepasst.

Dadurch kann eine bessere Einbindung der Bewegung der grafischen Elemente in die gesamte visuelle Wahrnehmung des Benutzers des Kraftfahrzeugs und damit eine verbesserte Sicherheit erzielt werden.

Gemäß zumindest einer Ausführungsform wird mittels des Sensorsystems eine Richtung einer Fahrbahnmarkierung und/oder einer Fahrbahnbegrenzung und/oder eines Fahrbahnrands, insbesondere in der Umgebung des Kraftfahrzeugs, als die ausgezeichnete Richtung bestimmt.

Die Fluchtrichtung der grafischen Elemente kann dann beispielsweise abhängig von der Fluchtrichtung der Straße, beziehungsweise der Fahrbahnmarkierungen, der Fahrbahnbegrenzung und/oder des Fahrbahnrands, ausgerichtet sein, so dass eine gemeinsame Ausrichtung der Bewegung von AR-Informationen in Form der grafischen Elemente und realer Objekte ermöglicht wird. Dadurch wird die Sicherheit für den Fahrer aufgrund weniger starker Ablenkung erhöht.

Gemäß zumindest einer Ausführungsform wird mittels des Sensorsystems eine Blickrichtung des Benutzers als die ausgezeichnete Richtung bestimmt.

Die Bewegung entlang des Bildlaufpfads kann also dann im Wesentlichen oder gleich der Blickrichtung des Fahrers sein, so dass eine besonders geringe Ablenkung und damit eine besonders hohe Sicherheit erzielt werden können.

Erfindugsgemäß wird eine Mensch-Maschine-Schnittstellenvorrichtung für ein Kraftfahrzeug angegeben, welche ein AR-System, eine Eingabeschnittstelle, ein Sensorsystem und eine Recheneinheit aufweist. Das AR-System ist dazu eingerichtet, ein erstes grafisches Element in ein Blickfeld eines Benutzers des Kraftfahrzeugs einzublenden, derart, dass das erste grafische Element innerhalb eines Anzeigebereichs angeordnet ist. Die Eingabeschnittstelle ist dazu eingerichtet, ein Bildlaufeingabesignal zu erfassen. Das Sensorsystem ist dazu eingerichtet, eine ausgezeichnete Richtung, insbesondere einer Umgebung des Kraftfahrzeugs oder einer Umgebung des Benutzers zu bestimmen. Die Recheneinheit ist dazu eingerichtet, einen Bildlaufpfad in Abhängigkeit von der ausgezeichneten Richtung zu bestimmen, wobei der Bildlaufpfad einer Linie entspricht, die mit der ausgezeichneten Richtung einen gemeinsamen Fluchtpunkt aufweist. Das AR-System ist dazu eingerichtet, das erste grafische Element abhängig von dem Bildlaufeingabesignal entlang des Bildlaufpfads aus dem Anzeigebereich herauszubewegen.

Das AR-System ist dazu eingerichtet, abhängig von dem Bildlaufeingabesignal ein zweites grafisches Element entlang des Bildlaufpfads in den Anzeigebereich hineinzubewegen.

Gemäß zumindest einer Ausführungsform der Mensch-Maschine-Schnittstellenvorrichtung beinhaltet das AR-System ein Head-up-Display-System, um das erste grafische Element, und insbesondere das zweite grafische Element, in das Blickfeld einzublenden.

Die Anzeigefläche kann in solchen Systemen mit Vorteil einer Windschutzscheibe des Kraftfahrzeugs oder einem Teil der Windschutzscheibe entsprechen.

Gemäß zumindest einer Ausführungsform beinhaltet das AR-System ein auf einem Kopf tragbares visuelles Ausgabegerät, um das erste grafische Element, und insbesondere das zweite grafische Element, in das Blickfeld einzublenden.

Bei dem auf dem Kopf tragbaren visuellen Ausgabegerät (englisch "head mounted display", HMD) kann es sich insbesondere um ein AR-Brillensystem, eine Datenbrille oder Smartglasses handeln.

Gemäß zumindest einer Ausführungsform ist das Sensorsystem als Umgebungssensorsystem ausgebildet und dazu eingerichtet, eine Richtung einer Fahrbahnmarkierung und/oder einer Fahrbahnbegrenzung und/oder eines Fahrbahnrands in einer Umgebung des Kraftfahrzeugs als die ausgezeichnete Richtung zu bestimmen.

Gemäß zumindest einer Ausführungsform ist das Sensorsystem als Blickerfassungssystem, beispielsweise als Eyetracker, ausgebildet und dazu eingerichtet, eine Blickrichtung des Benutzers als die ausgezeichnete Richtung zu bestimmen.

Weitere Ausführungsformen der Mensch-Maschine-Schnittstellenvorrichtung folgen unmittelbar aus den verschiedenen Ausgestaltungen des Verfahrens zur Mensch-Maschine-Interaktion nach dem verbesserten Konzept und umgekehrt. Insbesondere kann die Mensch-Maschine-Schnittstellenvorrichtung dazu eingerichtet oder programmiert sein, ein Verfahren nach dem verbesserten Konzept durchzuführen oder eine solche Mensch-Maschine-Schnittstellenvorrichtung führt ein Verfahren nach dem verbesserten Konzept durch.

Nach einem weiteren unabhängigen Aspekt des verbesserten Konzepts wird ein Computerprogramm mit Befehlen angegeben, wobei die Befehle bei Ausführung des Computerprogramms durch eine Mensch-Maschine-Schnittstellenvorrichtung nach dem verbesserten Konzept die Mensch-Maschine-Schnittstellenvorrichtung dazu veranlassen, ein Verfahren nach dem verbesserten Konzept durchzuführen.

Gemäß einem weiteren unabhängigen Aspekt des verbesserten Konzepts wird ein computerlesbares Speichermedium angegeben, auf dem ein Computerprogramm nach dem verbesserten Konzept gespeichert ist.

Erfindungsgemäß wird ein Kraftfahrzeug angegeben, welches eine Mensch-Maschine-Schnittstellenvorrichtung und/oder ein computerlesbares Speichermedium nach dem verbesserten Konzept beinhaltet.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Mensch-Maschine-Schnittstellenvorrichtung beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden ist sind Ausführungsbeispiele der Erfindung beschrieben. In den Figuren zeigen:
- Fig. 1: ein Kraftfahrzeug mit einer schematischen Darstellung einer beispielhaften Ausführungsform einer Mensch-Maschine-Schnittstellenvorrichtung nach dem verbesserten Konzept; und
- Fig. 2: ein schematisches Ablaufdiagramm eines Verfahrens zur Mensch-MaschineInteraktion nach dem verbesserten Konzept.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

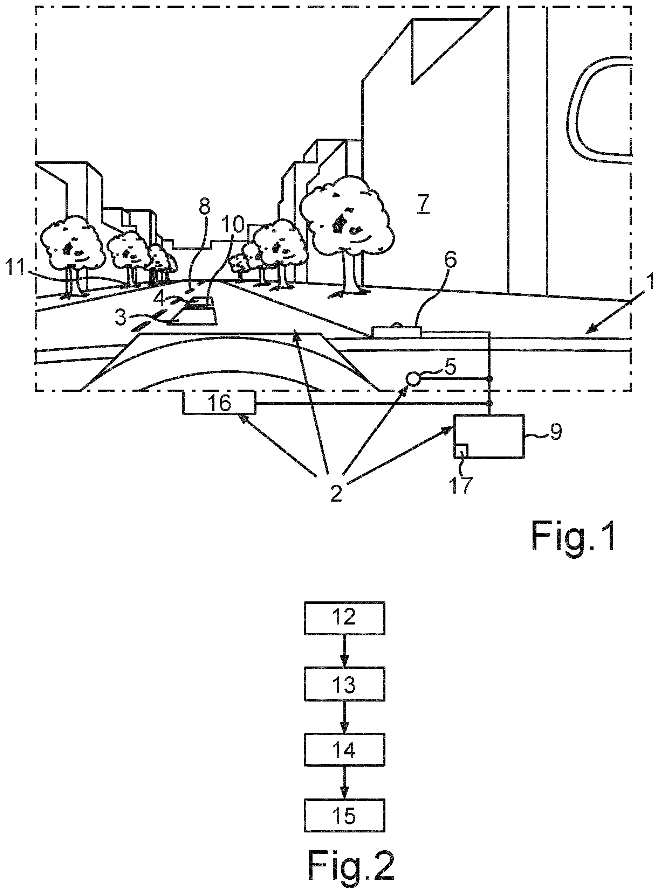

In Fig. 1 ist ein Kraftfahrzeug 1 insbesondere aus der Sicht eines Fahrers des Kraftfahrzeugs 1 gezeigt. Das Kraftfahrzeug 1 weist eine Mensch-Maschine-Schnittstellenvorrichtung 2 nach dem verbesserten Konzept auf.

Die Mensch-Maschine-Schnittstellenvorrichtung 2 weist insbesondere ein Head-up-Display auf, welches einen Teil einer Windschutzscheibe des Kraftfahrzeugs 1 als Anzeigefläche 11 nutzt und eine Recheneinheit 9 beinhaltet. Das Head-up-Display weist außerdem eine Bilderzeugungs- und Optikeinheit 16 auf, die dazu eingerichtet ist, basierend auf von der Recheneinheit 9 bereitgestellten Grafikdaten, beispielsweise in Form einer Grafikdatei oder in Form von Steuerbefehlen, ein Bild zu erzeugen und das Bild auf die Anzeigefläche 11 zu projizieren.

Die Mensch-Maschine-Schnittstellenvorrichtung 2 weist auch eine Eingabeschnittstelle 5 auf, welche beispielsweise als Drehrad ausgebildet sein kann. Ein Benutzer des Kraftfahrzeugs 1 kann das Drehrad beziehungsweise die Eingabeschnittstelle 5 betätigen, also drehen, um ein Bildlaufeingabesignal zu erzeugen.

Die Mensch-Maschine-Schnittstellenvorrichtung 2 beinhaltet außerdem ein Sensorsystem 6, welches beispielsweise als Kamerasystem ausgebildet sein kann, um eine Umgebung 7 des Kraftfahrzeugs 1 zu erfassen und abzubilden.

Auf der Anzeigefläche 11 sind ein erstes und ein zweites grafisches Element 3, 4 dargestellt, wobei das erste grafische Element 3 beispielsweise derzeit von dem Benutzer ausgewählt wurde und sich in einem Anzeigebereich der Anzeigefläche 11 befindet.

Optional kann die Mensch-Maschine-Schnittstellenvorrichtung 2 oder die Recheneinheit 9 ein computerlesbares Speichermedium 17 aufweisen, auf welchem ein Computerprogramm nach dem verbesserten Konzept gespeichert ist. Die Recheneinheit 9 kann das Computerprogramm beispielsweise ausführen, um die Mensch-Maschine-Schnittstellenvorrichtung 2 zum Ausführen eines Verfahrens nach dem verbesserten Konzept zu veranlassen.

Die Funktion der Mensch-Maschine-Schnittstellenvorrichtung 2 wird anhand des in Fig. 2 gezeigten Ablaufdiagramms eines Verfahrens zur Mensch-Maschine-Interaktion nach dem verbesserten Konzept näher erläutert.

In einem Schritt 12 des Verfahrens wird das erste grafische Element 3 mittels der Bilderzeugungs- und Optikeinheit 16, angesteuert durch die Recheneinheit 9, in den Anzeigebereich der Anzeigefläche 11, welcher dem aktuell ausgewählten Objekt entspricht, in das Blickfeld des Benutzers eingeblendet.

In Schritt 13 des Verfahrens betätigt der Benutzer beispielsweise das Drehrad 5, um das Bildlaufeingabesignal zu erzeugen.

In Schritt 14 des Verfahrens wird mittels des Sensorsystems 6 eine ausgezeichnete Richtung 8 in der Umgebung 7 des Kraftfahrzeugs 1 bestimmt. Beispielsweise kann die ausgezeichnete Richtung 8 einer Fahrbahnmarkierungslinie entsprechen. Außerdem wird in Schritt 14 abhängig von der ausgezeichneten Richtung 8 ein Bildlaufpfad 10 ermittelt.

Der Bildlaufpfad 10 entspricht einer Linie, die mit der ausgezeichneten Richtung 8 einen gemeinsamen Fluchtpunkt aufweist.

In Schritt 15 des Verfahrens werden in Reaktion auf das Bildlaufeingabesignal das erste und das zweite grafische Element 3, 4 entlang des Bildlaufpfads 10 bewegt. Insbesondere können die grafischen Elemente 3, 4 Teil einer Liste von grafischen Objekten oder Elementen sein, durch die der Benutzer mittels Betätigung der Eingabeschnittstelle 5 blättern oder scrollen kann. Durch das Scrollen wird beispielsweise das erste grafische Element 3 aus dem Anzeigebereich herausbewegt, und das zweite grafische Element 4 wird in den Anzeigebereich hineinbewegt und insbesondere ausgewählt. Alternativ kann auch ein weiteres grafisches Element ausgewählt werden, indem das zweite grafische Element ebenfalls aus dem Anzeigebereich herausbewegt, also gescrollt, wird, und das weitere grafische Element in den Anzeigebereich hineinbewegt wird und dort beispielsweise verbleibt.

Durch das verbesserte Konzept wird die Sicherheit des Fahrers durch eine bessere Einbettung einer Bewegung grafischer Elemente innerhalb des Blickbereichs des Benutzers des Kraftfahrzeugs erhöht. Dadurch, dass grafische Inhalte mittels AR gewissermaßen auf der Straße in einer geraden oder gebogenen Form angezeigt werden können, kann der Benutzer des Kraftfahrzeugs seinen Blick auf die Straße gerichtet lassen, während er durch die grafischen Elemente blättert. Durch die Anpassung, insbesondere dynamische Anpassung, des Bildlaufpfads, kann eine Ablenkung des Fahrers minimiert werden. Mit der Verwendung eines AR-Systems können auch weitere Benutzerinteraktionen realisiert werden, beispielsweise Handschrifterkennung, um eine bestimmte Stelle einer Liste von grafischen Elementen auszuwählen oder Gestensteuerung.

Die Verwendung von AR-Brillensystemen während des Fahrens kann die Interaktion des Benutzers mit dem Kraftfahrzeug und die Sicherheit verbessern. In Ausführungsformen kann der Benutzer mit der Eingabeschnittstelle beispielsweise durch Blickbewegungen, Sprachbefehle, Schalter, Taster oder berührungsempfindliche Komponenten, kommunizieren.

Das verbesserte Konzept ist für vollständig manuell betreibbare Kraftfahrzeuge ebenso anwendbar wie für teilweise oder vollständig automatisiert betreibbare Fahrzeuge.

### Bezugszeichenliste

- 1: Kraftfahrzeug
- 2: Mensch-Maschine-Schnittstellenvorrichtung
- 3, 4: grafische Elemente
- 5: Eingabeschnittstelle
- 6: Sensorsystem
- 7: Umgebung
- 8: ausgezeichnete Richtung
- 9: Recheneinheit
- 10: Bildlaufpfad
- 11: Anzeigefläche
- 12 - 15: Verfahrensschritte
- 16: Bilderzeugungs- und Optikeinheit
- 17: computerlesbares Speichermedium

## Patentansprüche

1. Verfahren zur Mensch-Maschine-Interaktion in einem Kraftfahrzeug (1), wobei
- ein erstes grafisches Element (3) mittels eines Erweiterte-Realität-Systems des Kraftfahrzeugs (1) in ein Blickfeld eines Benutzers des Kraftfahrzeugs (1) eingeblendet wird, derart, dass das erste grafische Element (3) innerhalb eines Anzeigebereichs angeordnet ist;
- ein Bildlaufeingabesignal mittels einer Eingabeschnittstelle (5) des Kraftfahrzeugs (1) erfasst wird;
- mittels eines Sensorsystems (6) des Kraftfahrzeugs (1) eine ausgezeichnete Richtung (8) bestimmt wird;
- mittels einer Recheneinheit (9) des Kraftfahrzeugs (1) ein Bildlaufpfad (10) in Abhängigkeit von der ausgezeichneten Richtung (8) bestimmt wird, wobei der Bildlaufpfad (10) einer Linie entspricht, die mit der ausgezeichneten Richtung (8) einen gemeinsamen Fluchtpunkt aufweist; und
- abhängig von dem Bildlaufeingabesignal das erste grafische Element (3) entlang des Bildlaufpfads (10) mittels des Erweiterte-Realität-Systems aus dem Anzeigebereich herausbewegt wird;
- abhängig von dem Bildlaufeingabesignal ein zweites grafisches Element (4) mittels des Erweiterte-Realität-Systems entlang des Bildlaufpfads (10) in den Anzeigebereich hineinbewegt wird; und
- das Bildlaufeingabesignal ein durch eine Nutzereingabe erzeugter Befehl ist, um auf der Anzeigefläche durch eine Liste von Objekten zu scrollen oder zu blättern, zu welcher das erste und das zweite grafische Element gehören.

2. Verfahren nach Anspruch 1,
**dadurch gekennzeichnet, dass**
abhängig von dem Bildlaufeingabesignal eine Vielzahl von grafischen Elementen entlang des Bildlaufpfads bewegt, wobei die Vielzahl von grafischen Elementen das erste und das zweite grafische Element beinhaltet.

3. Verfahren nach einem der Ansprüche 1 oder 2,
**dadurch gekennzeichnet, dass**
eine Bewegungsgeschwindigkeit, mit das erste grafische Element (3) aus dem Anzeigebereich herausbewegt wird mittels des Erweiterte-Realität-Systems abhängig von einer Fahrtgeschwindigkeit des Kraftfahrzeugs (1) angepasst wird.

4. Verfahren nach einem der Ansprüche 1 bis 3,
**dadurch gekennzeichnet, dass**
mittels des Sensorsystems (6) eine Richtung einer Fahrbahnmarkierung und/oder einer Fahrbahnbegrenzung und/oder eines Fahrbahnrands als die ausgezeichnete Richtung (8) bestimmt wird.

5. Verfahren nach einem der Ansprüche 1 bis 3,
**dadurch gekennzeichnet, dass**
mittels des Sensorsystems (6) eine Blickrichtung des Benutzers als die ausgezeichnete Richtung (8) bestimmt wird.

6. Mensch-Maschine-Schnittstellenvorrichtung für ein Kraftfahrzeug (1), aufweisend
- ein Erweiterte-Realität-System, dazu eingerichtet, ein erstes grafisches Element (3) in ein Blickfeld eines Benutzers des Kraftfahrzeugs (1) einzublenden, derart, dass das erste grafische Element (3) innerhalb eines Anzeigebereichs angeordnet ist;
- eine Eingabeschnittstelle (5), dazu eingerichtet, ein Bildlaufeingabesignal zu erfassen;
wobei
- die Mensch-Maschine-Schnittstellenvorrichtung (2) ein Sensorsystem (6) aufweist, dazu eingerichtet, eine ausgezeichnete Richtung (8) zu bestimmen;
- die Mensch-Maschine-Schnittstellenvorrichtung (2) eine Recheneinheit (9) aufweist, dazu eingerichtet, einen Bildlaufpfad (10) in Abhängigkeit von der ausgezeichneten Richtung (8) zu bestimmen, wobei der Bildlaufpfad (10) einer Linie entspricht, die mit der ausgezeichneten Richtung (8) einen gemeinsamen Fluchtpunkt aufweist; und
- das Erweiterte-Realität-System dazu eingerichtet ist, das erste grafische Element (3) abhängig von dem Bildlaufeingabesignal entlang des Bildlaufpfads (10) aus dem Anzeigebereich herauszubewegen
- das Erweiterte-Realität-System dazu eingerichtet ist, abhängig von dem Bildlaufeingabesignal ein zweites grafisches Element (4) entlang des Bildlaufpfads (10) in den Anzeigebereich hineinzubewegen; und
- das Bildlaufeingabesignal ein durch eine Nutzereingabe erzeugter Befehl ist, um auf der Anzeigefläche durch eine Liste von Objekten zu scrollen oder zu blättern, zu welcher das erste und das zweite grafische Element gehören.

7. Mensch-Maschine-Schnittstellenvorrichtung nach Anspruch 6,
**dadurch gekennzeichnet, dass**
das Erweiterte-Realität-System ein Head-up-Display-System beinhaltet, um das erste grafische Element (3) in das Blickfeld einzublenden.

8. Mensch-Maschine-Schnittstellenvorrichtung nach Anspruch 6,
**dadurch gekennzeichnet, dass**
das Erweiterte-Realität-System ein auf einem Kopf tragbares visuelles Ausgabegerät beinhaltet, insbesondere um ein AR-Brillensystem, eine Datenbrille oder Smartglasses, um das erste grafische Element (3) in das Blickfeld einzublenden.

9. Mensch-Maschine-Schnittstellenvorrichtung nach einem der Ansprüche 6 bis 8,
**dadurch gekennzeichnet, dass**
- das Sensorsystem (6) als Umgebungssensorsystem ausgebildet und dazu eingerichtet ist, eine Richtung einer Fahrbahnmarkierung und/oder einer Fahrbahnbegrenzung und/oder eines Fahrbahnrands als die ausgezeichnete Richtung (8) zu bestimmen wird; oder
- das Sensorsystem (6) als Blickerfassungssystem ausgebildet und dazu eingerichtet ist, eine Blickrichtung des Benutzers als die ausgezeichnete Richtung (8) zu bestimmen.

10. Computerprogramm mit Befehlen, welche bei Ausführung des Computerprogramms durch eine Mensch-Maschine-Schnittstellenvorrichtung (2) nach einem der Ansprüche 6 bis 9, die Mensch-Maschine-Schnittstellenvorrichtung (2) dazu veranlassen, ein Verfahren nach einem der Ansprüche 1 bis 5 durchzuführen.

## Claims

1. Method for human-machine interaction in a motor vehicle (1), wherein
- a first graphical element (3) is superimposed into a visual field of a user of the motor vehicle (1) by means of an augmented-reality system of the motor vehicle (1) in such a way that the first graphical element (3) is arranged within a display region;
- a scrolling input signal is detected by means of an input interface (5) of the motor vehicle (1);
- a highlighted direction (8) is determined by means of a sensor system (6) of the motor vehicle (1);
- a scrolling path (10) is determined by means of a computing unit (9) of the motor vehicle (1) on the basis of the highlighted direction (8), wherein the scrolling path (10) corresponds to a line which has a common vanishing point with the highlighted direction (8); and
- the first graphical element (3) is moved out of the display region along the scrolling path (10) by means of the augmented-reality system, depending on the scrolling input signal;
- a second graphical element (4) is moved into the display region along the scrolling path (10) by means of the augmented-reality system, depending on the scrolling input signal; and
- the scrolling input signal is a command generated by a user input in order to scroll or to leaf through a list of objects, which includes the first and the second graphical element, in the display area.

2. Method according to Claim 1,
**characterized in that**
a plurality of graphical elements is moved along the scrolling path depending on the scrolling input signal, wherein the plurality of graphical elements contains the first and the second graphical element.

3. Method according to either of Claims 1 and 2,
**characterized in that**
the movement speed at which the first graphical element (3) is moved out of display region is adjusted by means of the augmented-reality system depending on a speed of travel of the motor vehicle (1).

4. Method according to one of Claims 1 to 3,
**characterized in that**
a direction of a roadway marking and/or a roadway boundary and/or a roadway edge is determined as the highlighted direction (8) by means of the sensor system (6) .

5. Method according to one of Claims 1 to 3,
**characterized in that**
a viewing direction of the user is determined as the highlighted direction (8) by means of the sensor system (6) .

6. Human-machine interface device for a motor vehicle (1), having
- an augmented-reality system which is configured to superimpose a first graphical element (3) into a visual field of a user of the motor vehicle (1) in such a way that the first graphical element (3) is arranged within a display region;
- an input interface (5) which is configured to detect a scrolling input signal;
wherein
- the human-machine interface device (2) has a sensor system (6) which is configured to determine a highlighted direction (8);
- the human-machine interface device (2) has a computing unit (9) which is configured to determine a scrolling path (10) on the basis of the highlighted direction (8), wherein the scrolling path (10) corresponds to a line which has a common vanishing point with the highlighted direction (8); and
- the augmented-reality system is configured to move the first graphical element (3) out of the display region along the scrolling path (10), depending on the scrolling input signal;
- the augmented-reality system is configured to move a second graphical element (4) into the display region along the scrolling path (10) by means of the augmented-reality system, depending on the scrolling input signal; and
- the scrolling input signal is a command generated by a user input in order to scroll or to leaf through a list of objects, which includes the first and the second graphical element, in the display area

7. Human-machine interface device according to Claim 6,
**characterized in that**
the augmented-reality system contains a head-up display system in order to superimpose the first graphical element (3) into the visual field.

8. Human-machine interface device according to Claim 6,
**characterized in that**
the augmented-reality system contains a visual output device which can be worn on the head, in particular an augmented-reality glasses system, data glasses or smartglasses, in order to superimpose the first graphical element (3) into the visual field.

9. Human-machine interface device according to one of Claims 6 to 8,
**characterized in that**
- the sensor system (6) is designed as an environment sensor system and is configured to determine a direction of a roadway marking and/or a roadway boundary and/or a roadway edge as the highlighted direction (8); or
- the sensor system (6) is designed as a view detecting system and is configured to determine a viewing direction of the user as the highlighted direction (8).

10. Computer program containing instructions which, when the computer program is executed by a human-machine interface device (2) according to one of Claims 6 to 9, cause the human-machine interface device (2) to carry out a method according to one of Claims 1 to 5.

## Revendications

1. Procédé d'interaction homme-machine dans un véhicule automobile (1),
- un premier élément graphique (3) étant superposé dans un champ de vision d'un utilisateur du véhicule automobile (1) au moyen d'un système de réalité étendue du véhicule automobile (1), de telle sorte que le premier élément graphique (3) est disposé à l'intérieur d'une zone d'affichage ;
- un signal d'entrée de défilement d'image étant acquis au moyen d'une interface d'entrée (5) du véhicule automobile (1) ;
- une direction remarquable (8) étant déterminée au moyen d'un système capteur (6) du véhicule automobile (1) ;
- un chemin de défilement d'image (10) étant déterminé au moyen d'une unité de calcul (9) du véhicule automobile (1) en fonction de la direction remarquable (8), le chemin de défilement d'image (10) correspondant à une ligne qui présente un point de fuite commun avec la direction remarquable (8) ; et
- en fonction du signal d'entrée de défilement d'image, le premier élément graphique (3) étant déplacé hors de la zone d'affichage le long du chemin de défilement d'image (10) au moyen du système de réalité étendue ;
- en fonction du signal d'entrée de défilement d'image, un deuxième élément graphique (4) est déplacé à l'intérieur de la zone d'affichage le long du chemin de défilement d'image (10) au moyen du système de réalité étendue ; et
- le signal d'entrée de défilement d'image étant une instruction générée par une saisie d'utilisateur en vue de parcourir ou de faire défiler sur la surface d'affichage une liste d'objets à laquelle appartiennent le premier et le deuxième élément graphique.

2. Procédé selon la revendication 1, **caractérisé en ce qu'**une pluralité d'éléments graphiques sont déplacés le long du chemin de défilement d'image en fonction du signal d'entrée de défilement d'image, la pluralité d'éléments graphiques contenant le premier et le deuxième élément graphique.

3. Procédé selon la revendication 1 ou 2, **caractérisé en ce qu'**une vitesse de déplacement à laquelle le premier élément graphique (3) est déplacé hors de la zone d'affichage est adaptée au moyen du système de réalité étendue en fonction de la vitesse de déplacement du véhicule automobile (1).

4. Procédé selon l'une des revendications 1 à 3, **caractérisé en ce qu'**une direction d'un marquage de la chaussée et/ou d'une délimitation de la chaussée et/ou d'un bord de la chaussée est déterminée en tant que direction remarquable (8) au moyen du système capteur (6) .

5. Procédé selon l'une des revendications 1 à 3, **caractérisé en ce qu'**une direction du regard de l'utilisateur est déterminée en tant que direction remarquable (8) au moyen du système capteur (6).

6. Dispositif d'interface homme-machine pour un véhicule automobile (1), comprenant
- un système de réalité étendue, conçu pour superposer un premier élément graphique (3) dans un champ de vision d'un utilisateur du véhicule automobile (1), de telle sorte que le premier élément graphique (3) est disposé à l'intérieur d'une zone d'affichage ;
- une interface d'entrée (5), conçue pour acquérir un signal d'entrée de défilement d'image ;
- le dispositif d'interface homme-machine (2) possédant un système capteur (6) qui est conçu pour déterminer une direction remarquable (8) ;
- le dispositif d'interface homme-machine (2) possédant une unité de calcul (9) qui est conçue pour déterminer un chemin de défilement d'image (10) en fonction de la direction remarquable (8), le chemin de défilement d'image (10) correspondant à une ligne qui présente un point de fuite commun avec la direction remarquable (8) ; et
- le système de réalité étendue étant conçu pour déplacer le premier élément graphique (3) hors de la zone d'affichage le long du chemin de défilement d'image (10) en fonction du signal d'entrée de défilement d'image ;
- le système de réalité étendue étant conçu pour déplacer un deuxième élément graphique (4) à l'intérieur de la zone d'affichage le long du chemin de défilement d'image (10) en fonction du signal d'entrée de défilement d'image ; et
- le signal d'entrée de défilement d'image étant une instruction générée par une saisie d'utilisateur en vue de parcourir ou de faire défiler sur la surface d'affichage une liste d'objets à laquelle appartiennent le premier et le deuxième élément graphique.

7. Dispositif d'interface homme-machine selon la revendication 6, **caractérisé en ce que** le système de réalité étendue contient un système d'affichage tête haute afin de superposer le premier élément graphique (3) dans le champ de vision.

8. Dispositif d'interface homme-machine selon la revendication 6, **caractérisé en ce que** le système de réalité étendue contient un périphérique de sortie visuel pouvant être porté sur la tête, notamment un système de lunettes AR, des lunettes connectées ou des lunettes intelligentes afin de superposer le premier élément graphique (3) dans le champ de vision.

9. Dispositif d'interface homme-machine selon l'une des revendications 6 à 8, **caractérisé en ce que**
- le système capteur (6) est réalisé sous la forme d'un capteur d'environnement et est conçu pour déterminer une direction d'un marquage de la chaussée et/ou d'une délimitation de la chaussée et/ou d'un bord de la chaussée en tant que direction remarquable (8) ; ou
- le système capteur (6) est réalisé sous la forme d'un système d'acquisition du regard et conçu pour déterminer une direction du regard de l'utilisateur en tant que direction remarquable (8).

10. Programme informatique comprenant des instructions qui, lors de l'exécution du programme informatique par un dispositif d'interface homme-machine (2) selon l'une des revendications 6 à 9, amènent le dispositif d'interface homme-machine (2) à mettre en œuvre un procédé selon l'une des revendications 1 à 5.
